# EUROPEAN PATENT APPLICATION

(11) **EP 2 112 253 A2**
(43) Date of publication of application: **28.10.2009**
(21) Application number: 09250780.5
(22) Date of filing: 20.03.2009
(51) Int. Cl.: C23C 28/00, F01D 5/00, B23P 15/00

(54) **Method of restoring an article**

(30) Priority: 21.04.2008 US 106582
(71) Applicant: United Technologies Corporation, Hartford, CT 06101 (US)
(72) Inventor: Quinn, Daniel E., Windsor, CT 06095 (US); Goodstein, Mark B., Windsor Locks, CT 06096 (US); Walton, Leonard C., West Hartford, CT 06119 (US)
(74) Representative: Leckey, David Herbert

(57) **Abstract**

A method for restoring an article (10) includes removing an outer portion (34) of a metallic substrate (32) of an initial article (10) having an original design weight to produce an intermediate article (10'). A protective coating (42) is deposited on the intermediate article (10') to produce a restored article (10") having a restored article weight that is substantially equal to the original design weight.

## Description

### BACKGROUND OF THE INVENTION

This disclosure relates to restoring an article, such as a turbine blade. More particularly, this disclosure relates to adding a coating to an article without increasing the weight of the article and/or changing the dimensions of the article.

Airfoils and other articles typically operate in relatively harsh environments. For instance, an airfoil may operate under high temperatures, corrosive conditions, and a variety of different stress states. Typically, the article is designed with an alloy material to withstand the harsh environment. However, the actual effects of the environment on the article may not be fully understood until after a period of use. For example, examination of a turbine blade airfoil after a period of use in a gas turbine engine may reveal relatively high amounts of erosion or corrosion in certain areas. As a result, the article may be redesigned to better protect against the particular environmental effects.

In one type of redesign, the original article may be replaced with a redesigned article that includes a protective coating. New tooling may be designed to manufacture the redesigned article. The new tooling may account for the thickness and weight of the coating that will be used such that the redesigned article is about the same weight and dimension as the original article. However, redesigning the article and tooling in this manner is expensive and time consuming, and results in scrapping the original article.

In another type of redesign, the protective coating may be applied onto the existing article. However, the coating increases the weight of the article and changes the article dimensions. For a turbine blade airfoil, the additional weight may increase stresses on the rotor disk and thereby reduce the expected lifetime of the rotor disk. Thus, there is a need for a method of restoring an article that adds a protective coating without increasing weight and changing the article dimensions.

### SUMMARY OF THE INVENTION

An example method for restoring an article includes removing an outer portion of a metallic substrate of an initial article having an original design weight to produce an intermediate article. A protective coating is then deposited on the intermediate article to produce a restored article having a restored article weight that is substantially equal to the design weight.

In another aspect, an example method for restoring an article includes removing an outer portion of a metallic substrate of an initial article having an original design profile to produce an intermediate article having an intermediate article profile that is smaller than the design profile. A protective coating is then deposited on the intermediate article to produce a restored article having a restored article profile that is substantially equal to the original design profile.

In another aspect, a method for restoring an article includes removing a first coating and an outer layer of a metallic substrate of an initial article having an original design profile and an original design weight to produce an intermediate article having an intermediate article profile that is smaller than the design profile. A second coating is then deposited on the intermediate article to produce a restored article having a restored article profile that is substantially equal to the original design profile and a restored article weight that is substantially equal to the original design weight. The second coating is different from the first coating.

### BRIEF DESCRIPTION OF THE DRAWINGS

The various features and advantages of the disclosed examples will become apparent to those skilled in the art from the following detailed description. The drawings that accompany the detailed description may be briefly described as follows.
Figure 1 illustrates an example article that is to be restored.
Figure 2 schematically illustrates an example method for restoring the article.

### DETAILED DESCRIPTION OF THE PREFERRED EMBODIMENT

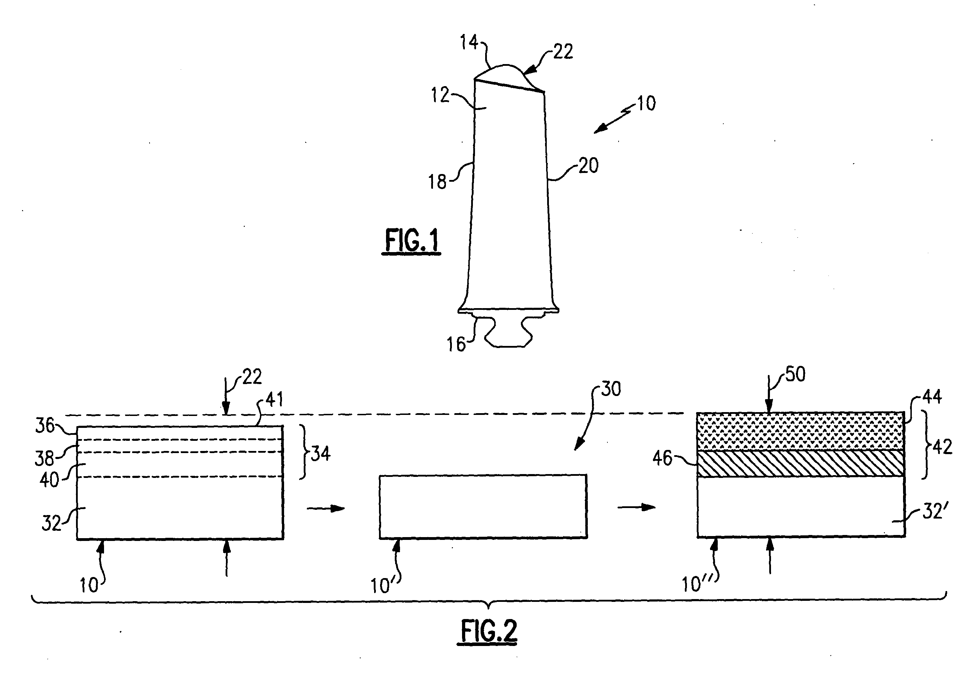

Figure 1 illustrates selected portions of an example article 10 that is to be restored. In this example, the article 10 is a gas turbine engine blade having an airfoil profile. However, it is to be understood that the article 10 may alternatively be a gas turbine engine vane, other gas turbine engine component, or a non-engine component that would benefit from the disclosed examples.

The example article 10 includes an airfoil section 12 that extends between a tip 14, a platform 16, a leading edge 18, and a trailing edge 20. At least the airfoil section 12 of the article 10 includes an original design profile 22. For example, the original design profile 22 refers to the as-designed geometry and dimensions of the airfoil section 12.

The article 10 may be used for a period of time within a gas turbine engine and subsequently repaired or restored for another cycle of use. After the period of time, the article 10 may be restored to its original weight, profile, or both with an upgrade in performance. For instance, as will be discussed below, the article 10 may include a metallic substrate 32, such as a nickel-based alloy. The metallic substrate 32 may not have any protective coating, or may include a protective coating that is now less favored or appears to be unsuitable for the operating conditions as indicated from the period of use. In this regard, there may be a desire to add a new or different protective coating to the article 10 for better erosion and/or corrosion protection in future cycles of use, but without increasing the weight of the original article 10 or significantly changing the profile 22 of the article 10.

Figure 2 schematically illustrates various stages of an example method 30 for restoring the article 10. Initially, the article 10 includes the metallic substrate 32 having an outer portion 34. As indicated above, the outer portion 34 may vary depending upon the original design of the article 10. For instance, the outer portion 34 may simply be an outermost layer of the metallic substrate 32 that was exposed to the surrounding environment of the article 10. Alternatively, the outer portion 34 may be a metallic coating, such as an aluminide coating. In another example, the outer portion 34 may include a ceramic coating 36 and a bond coat 38 between the ceramic coating 36 and the metallic substrate 32. Chemical elements from the bond coat 38 or the aluminide coating may inter-diffuse with elements from the metallic substrate 32 to form a diffusion zone 40 therebetween. Thus, as may be appreciated, the structure of the article 10 may be varied and is not limited to any particular structure. Given this description, one of ordinary skill in the art will be able to recognize application of the disclosed examples herein to their particular circumstances.

In the disclosed example, the article 10 is eroded from the first period of use in the gas turbine engine in an amount that is equal to the difference between the original design profile 22 and an outermost surface 41 of the article 10. However, in other examples, the article 10 may not have experienced any erosion and the outermost surface may be approximately equal to the original design profile 22.

In any case, the outer portion 34 is removed from the metallic substrate 32 to produce an intermediate article 10'. The outer portion 34 may be removed using any suitable removal technique. For instance, removing the outer portion 34 may include chemical removal, mechanical removal, or a combination of chemical and mechanical removal. Chemically removing the outer portion 34 may include using an acidic solution, such as nitric acid, hydrochloric acid, or a combination thereof. Mechanical removal may include grit blasting the outer portion 34 and/or subjecting the outer portion 34 to a temperature that is suitable to cause the outer portion 34 to flake off from the metallic substrate 32. For example, the ceramic coating 36 may be mechanically removed using grit blasting, and the bond coat 38 and diffusion zone 40 may be chemically removed. Additionally, for chemical removal, the acidic solution, the article 10, or both, may be agitated to facilitate removal of the outer portion 34, or the article 10 may be masked to limit removal in selected areas.

An amount of the metallic substrate 32 that is removed may be controlled by adjusting the removal time. For instance, the metallic substrate 32 may be exposed to a chemical stripping solution for a predetermined amount of time to remove a desired amount of the outer portion 34, as will be discussed below.

A protective coating 42 is then deposited onto the intermediate article 10' to produce a restored article 10". For example, the protective coating 42 may be any type of protective coating that is desired for enhancing the durability of performance of the restored article 10". For instance, the protective coating 42 may include a metallic coating and/or a ceramic coating. In the disclosed example, the protective coating includes a ceramic topcoat 44 and a bond coat 46 between the ceramic topcoat 44 and a metallic substrate 32'. The ceramic topcoat 44 and the bond coat 46 are different materials than the ceramic coating 36 and the bond coat 38 that were previously removed.

The ceramic topcoat 44 may include zirconia, such as yttrium-stabilized zirconia. The bond coat 46 may include MCrAlY, where the M includes at least one of nickel, cobalt, iron, or a combination thereof, the Cr is chromium, the Al is aluminum, and the Y is yttrium. As may be appreciated, the protective coating 42 is not limited to the disclosed coating types. Given this description, one of ordinary skill in the art will be able to recognize other types of coating for their particular needs.

In the disclosed example method 30 for restoring the article 10, the restored article 10" has a restored article weight that is substantially equal to an original design weight of the article 10. For instance, the weight of the protective coating 42 is approximately equal to the weight of the outer portion 34 that was removed from the article 10 plus any weight lost through erosion from the original design profile 22. Thus, given a selected protective coating 42 having a predetermined thickness, a selected thickness of the outer portion is removed from the original article 10 such that the restored article 10" weighs approximately equal to the original article 10 (e.g., before any use).

The weight of the restored article 10" is substantially equal to the weight of the original article 10. In one example, the weight of the restored article 10" may be exactly equal to the weight of the original article 10 or may vary within a predetermined tolerance. For example, the weight of the restored article 10" may be within about 5% of the weight of the original article 10. In a further example, the weight of the restored article 10" may be within about 1% of the weight of the original article 10. The substantially equal weight provides the benefit of not increasing stresses on attached components, such as a gas turbine engine rotor disk.

Likewise, given a selected protective coating 42 and coating thickness, the removal of the outer portion 34 may be controlled such that the restored article profile 50 is also substantially equal to the original article profile 22. As may be appreciated, the restored article profile 50 may be exactly equal to the original article profile 22 or may vary within a predetermined tolerance. For example, the restored article profile 50 may be within about 5% of the original article profile 22. In a further example, the restored article profile 50 may be within about 1% of the original article profile 22. The substantially equal profile facilitates maintaining the as-designed aerodynamics of the original article 10 with the restored article 10".

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure may only be determined by studying the following claims.

## Claims

1. A method for restoring an article (10), comprising:
removing an outer portion (34) of a metallic substrate (32) of an initial article (10) having an original design weight to produce an intermediate article (10'); and
depositing a protective coating (42) on the intermediate article (10') to produce a restored article having a restored article weight that is substantially equal to the original design weight.

2. The method as recited in claim 1, further comprising establishing a difference between the original design weight and the restored article weight that is less than 5% of the original design weight.

3. The method as recited in claim 1 or 2, further comprising establishing a difference between the original design weight and the restored article weight that is less than 1% of the original design weight.

4. The method as recited in any preceding claim, wherein removing the outer portion (34) includes chemically removing the outer portion (34) using an acidic solution.

5. The method as recited in any preceding claim, wherein depositing the protective coating (42) includes depositing a ceramic topcoat (44).

6. The method as recited in any preceding claim, further comprising selecting the protective coating (42) to include zirconia.

7. The method as recited in any preceding claim, further comprising selecting the protective coating (42) to include a bond coat (46), the bond coat (46) including, for example, MCrAlY, where the M includes at least one of nickel, cobalt, iron, or a combination thereof, the Cr is chromium, the Al is aluminum, and the Y is yttrium.

8. The method as recited in any preceding claim, wherein removing the outer portion (34) includes mechanically removing the outer portion (34).

9. The method as recited in any preceding claim, wherein removing the outer portion includes removing at least a portion of a coating (36) and an outer layer of the outer portion of the metallic substrate (32).

10. A method for restoring an article (10), comprising:
removing an outer portion (34) of a metallic substrate (32) of an initial article (10) having an original design profile to produce an intermediate article (10') having an intermediate article profile that is smaller than the original design profile; and
depositing a protective coating (42) on the intermediate article (10') to produce a restored article having a restored article profile that is substantially equal to the original design profile.

11. The method as recited in claim 10, including establishing a difference between the original design profile and the restored article profile that is less than 5% of the original design profile, for example less than 1% of the original design profile.

12. The method as recited in any preceding claim, wherein removing the outer portion (34) includes removing at least a portion of a diffusion zone (40) of the outer portion (34).

13. A method for restoring an article (10), comprising:
removing a first coating (34) and an outer layer of a metallic substrate (32) of an initial article having an original design profile and an original design weight to produce an intermediate article (10') having an intermediate article profile that is smaller than the original design profile; and
depositing a second coating (42) on the intermediate article (10') to produce a restored article (10") having a restored article profile that is substantially equal to the original design profile and a restored article weight that is substantially equal to the original design weight, the second coating being different from the first coating.

14. The method as recited in claim 13, wherein removing the first coating (36) includes removing a metallic coating.

15. The method as recited in claim 13 or 14, wherein removing the outer portion includes mechanically removing the first coating (36) and chemically removing at least a portion of the outer layer of the metallic substrate (32).
